# EUROPEAN PATENT SPECIFICATION

(11) **EP 4 099 644 B1**
(45) Date of publication and mention of the grant of the patent: **21.05.2025**
(21) Application number: 22176976.3
(22) Date of filing: 02.06.2022
(51) Int. Cl.: H04L 12/46

(54) **PACKET PROCESSING METHOD AND RELATED APPARATUS**
PAKETVERARBEITUNGSVERFAHREN UND ZUGEHÖRIGE VORRICHTUNG
PROCÉDÉ DE TRAITEMENT DE PAQUETS ET APPAREIL ASSOCIÉ

(30) Priority: 03.06.2021 CN 202110621479; 16.08.2021 CN 202110938562
(43) Date of publication of application: 07.12.2022
(73) Proprietor: Huawei Technologies Co., Ltd., Shenzhen, Guangdong 518129 (CN)
(72) Inventor: LI, Weihua, SHENZHEN, 518129 (CN); TIAN, Taixu, SHENZHEN, 518129 (CN); LIN, Libing, SHENZHEN, 518129 (CN)
(74) Representative: Körber, Martin Hans

(56) References cited:
- US-A1- 2002 198 687
- US-A1- 2015 295 729
- US-A1- 2017 279 638
- US-A1- 2018 097 722

## Description

### TECHNICAL FIELD

Embodiments of this application relate to the field of communications technologies, and specifically, to a packet processing method and a related apparatus.

### BACKGROUND

With continuous development of communications technologies, increasingly higher requirements are posed on a service forwarding capability. Data encapsulation of a forwarding chip is the last step of service forwarding.

When data encapsulation is implemented, an application-specific integrated circuit (application-specific integrated circuit, ASIC) encapsulation manner or a programmable encapsulation manner is usually used in a physical implementation architecture. In the ASIC encapsulation manner, a dedicated circuit unit needs to be designed for some specific protocols to encapsulate specific service data. However, in the ASIC encapsulation manner, only the specific service data can be encapsulated and there is no service scalability. Consequently, it is difficult to encapsulate service data corresponding to another protocol for which no dedicated circuit unit is designed. In addition, in the programmable encapsulation manner, instructions such as an addition operation, a subtraction operation, and a move operation that need to be executed by each ALU in an arithmetic logic unit (arithmetic logic unit, ALU) array need to be stored in an instruction memory (instruction memory, IMEM). Corresponding to different protocols, programmable modules such as ALUs are flexibly used to obtain corresponding executable instructions from the IMEM, so that any operation can be performed on service data to complete encapsulation in any protocol. However, when an amount of data is large or a service is complex, different service data is encapsulated only by changing corresponding executable instructions by ALUs. Consequently, an amount of data exchanged between ALU arrays is large, resource consumption is high, and costs are high.

US 2015/295729 A1 discloses a node for a communications system. It comprises a hardware accelerator that supports communications using any of a variety of different, UDP-based, tunnel protocols, and a tunnel software application configures the hardware accelerator to operate for any of the supported tunnel protocols. The hardware accelerator works for any UDP-based, non-cryptographic tunnel protocol. The tunnel software application provides the hardware accelerator with particular instances of generic outbound and inbound profiles that define the header fields for particular tunnel protocols. The hardware accelerator uses those profiles respectively to encapsulate and decapsulate outbound and inbound packets.

US 2018/097722 Al discloses packet handling including receiving a packet, associating the packet with configuration information, and performing packet handling operations on the packet according to packet handling instructions defined by the configuration information. Encapsulation and/or decapsulation operations are performed based on updateable configuration information specifying the operations to be performed.

### SUMMARY

The present invention is defined in the appended independent claims to which reference should be made. Advantageous features are set out in the appended dependent claims.

### BRIEF DESCRIPTION OF DRAWINGS

To describe technical solutions in embodiments of this application more clearly, the following briefly describes the accompanying drawings used in descriptions of embodiments. It is clear that the accompanying drawings in the following descriptions show merely some embodiments of this application.
FIG. 1A is a schematic diagram of a programmable architecture in a related solution;
FIG. 1B is a schematic diagram of data exchange performed when a programmable architecture in a related solution is used;
FIG. 2A is a schematic diagram of an application scenario of packet encapsulation according to this application;
FIG. 2B is a schematic diagram of another application scenario of packet encapsulation according to this application;
FIG. 3 is a schematic diagram of a packet processing system framework according to an embodiment of this application;
FIG. 4 is a schematic flowchart of a packet processing method according to an embodiment of this application;
FIG. 5 is a schematic diagram of a structure of a protocol packet header;
FIG. 6 is a schematic diagram of a structure of mapping first data according to this application;
FIG. 7 is a schematic diagram of a structure of mapping second data according to this application;
FIG. 8 is a schematic diagram of a structure of determining length information of a packet header according to this application;
FIG. 9 is a schematic diagram of reducing an amount of exchanged data after a packet processing method according to this application is applied;
FIG. 10 is a schematic diagram of a hardware structure of a communications device according to an embodiment of this application; and
FIG. 11 is a schematic diagram of a structure of a packet processing apparatus according to an embodiment of this application.

### DESCRIPTION OF EMBODIMENTS

With continuous development of communications technologies, increasingly higher requirements are posed on a service forwarding capability. Data encapsulation of a forwarding chip is the last step of service forwarding. Usually, a data encapsulation process may be understood as follows: mapping service data to a payload of an encapsulation protocol, and filling a packet header of a corresponding protocol to form a data packet of the encapsulation protocol. An ASIC encapsulation manner or a programmable encapsulation manner is usually used in a related physical implementation architecture to implement data encapsulation.

In the ASIC encapsulation manner, a dedicated circuit unit needs to be designed for some specific encapsulation protocols to encapsulate specific service data. However, the ASIC encapsulation manner is only applicable to encapsulation of the specific service data and has no service scalability. Consequently, it is difficult to encapsulate service data corresponding to another protocol for which no dedicated circuit unit is designed.

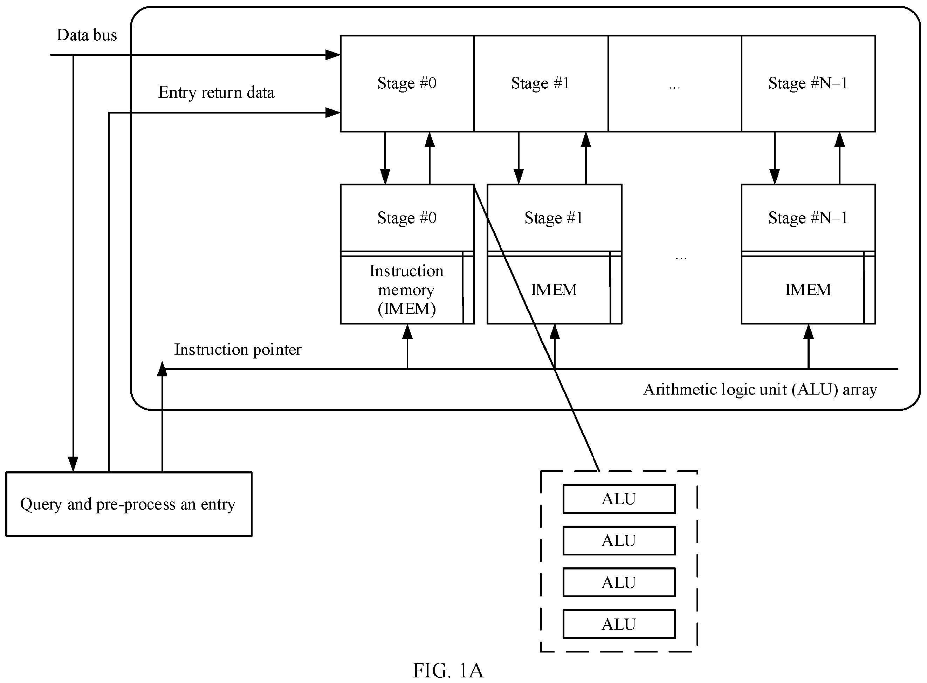

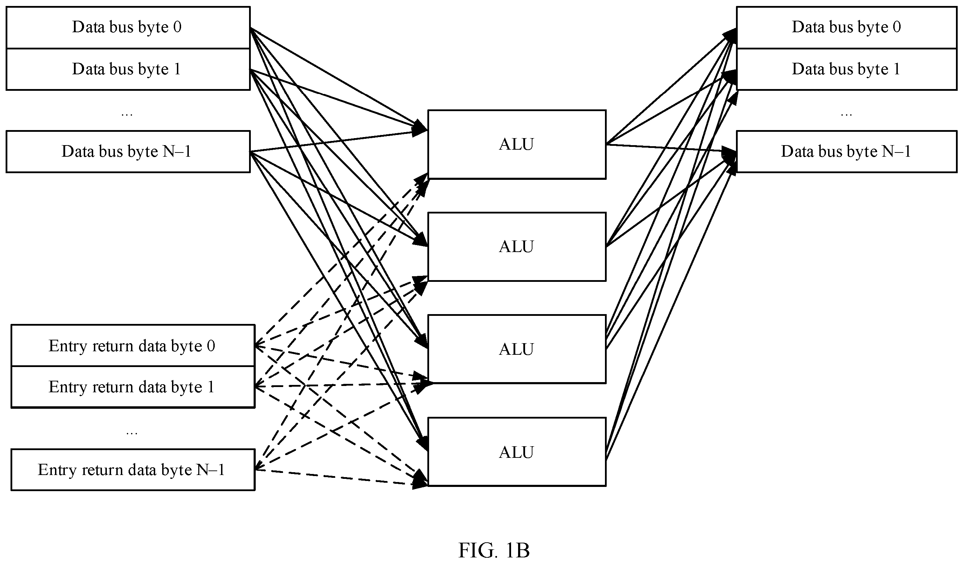

In addition, for the programmable encapsulation manner, refer to a programmable architecture shown in FIG. 1A for understanding. As shown in FIG. 1A, a to-be-encapsulated data packet may be obtained through a data bus. Then, a corresponding encapsulation entry is queried to obtain corresponding entry return data. After the entry return data is pre-processed, the data may be converted into two parts of data. A first part of data includes entry return data, and a second part of data is an instruction pointer that needs to be executed by each ALU in each stage of ALU array (for example, Stage #0, Stage #1, or the like) and that is obtained through pre-processing. Each ALU correspondingly executes one instruction. Then, the to-be-encapsulated data packet and the first part of data are input into a first-stage ALU array (that is, Stage #0), and the second part of data is stored in an IMEM corresponding to each stage of ALU array. In this way, after an instruction that needs to be executed by each ALU in the first-stage ALU array is obtained from the IMEM, each ALU processes the to-be-encapsulated data packet according to the obtained instruction, and outputs a processed data packet to a next-stage ALU array (for example, Stage #1, ..., or Stage #N-1). In this way, the next-stage ALU array repeatedly performs an operation performed by the first-stage ALU array, to output an encapsulated packet. In the programmable encapsulation manner, an instruction, for example, an addition operation, a subtraction operation, or a move operation, that needs to be executed by each ALU in an ALU array needs to be stored in an IMEM. Corresponding to different encapsulation protocols, programmable modules such as ALUs are flexibly used to obtain corresponding instructions from the IMEM, so that any operation can be performed on service data to complete encapsulation in any encapsulation protocol. However, for example, one stage of ALU array includes four ALUs. It can be learned from a schematic diagram shown in FIG. 1B that, when an amount of data is large or a service is complex, different service data is encapsulated by changing corresponding instructions by four ALUs in each stage of ALU array. Consequently, an amount of field data exchanged between ALU arrays is complex, resource consumption is higher, and costs are higher.

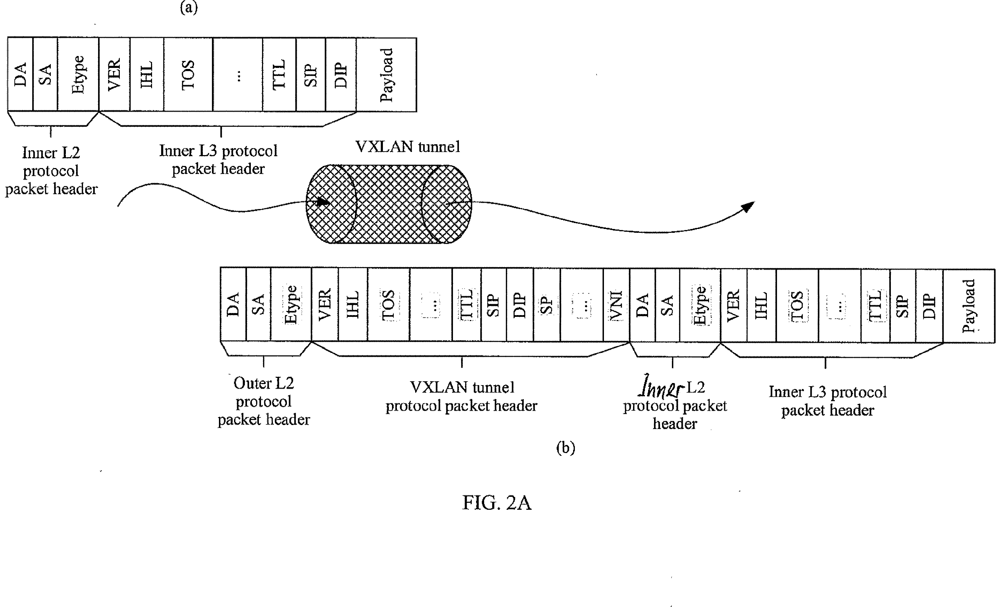

FIG. 2A is a schematic diagram of an application scenario of packet encapsulation according to this application. It can be learned from a part (a) and a part (b) in FIG. 2A that, before a to-be-encapsulated data packet enters a virtual extensible local area network (virtual extensible local area network, VXLAN) tunnel for transmission, a VXLAN tunnel ingress device modifies some field content of an inner L3 protocol packet header, and adds an inner L2 protocol packet header. In addition, during transmission in the VXLAN tunnel, an outer L2 protocol packet header and a VXLAN tunnel protocol packet header are further added. The VXLAN tunnel protocol packet header is used to establish an end-to-end sending and receiving tunnel on an underlay network, and the outer L2 protocol packet header is used to carry destination media access control (media access control, MAC) address information, source MAC address information, and the like.

Compared with the part (a) that shows the protocol packet headers, the part (b) further shows a change status of a field in each protocol packet header before the data packet enters the VXLAN tunnel and after the data packet passes through the VXLAN tunnel. In other words, a value change of the field in each protocol packet header is affected by forwarding of the data packet. When the data packet passes through different forwarding nodes or network devices, values of corresponding fields need to be changed. For example, the fields include an Ethernet type (Ethernet type, Etype) field in the outer L2 protocol packet header, fields such as a type of service (type of service, TOS) field and a time to live (time to live, TTL) field in the VXLAN tunnel protocol packet header, an Etype field in an inner L2 protocol packet header, and fields such as a TOS field and a TTL field in an inner L3 protocol packet header. In addition, values of fields are not affected by forwarding of the data packet. For example, the fields include a destination address (destination address, DA) field and a source address (source address, SA) field in the outer L2 protocol packet header, fields such as a version (version, VER) field, an IP header length (IP header length, IHL) field, a source internet protocol (source internet protocol, SIP) field, and a destination IP (destination IP, DIP) field in the VXLAN tunnel protocol packet header, a DA field and an SA field in the inner L2 protocol packet header, and a VER field, an IHL field, a SIP field, and a DIP field in the inner L3 protocol packet header.

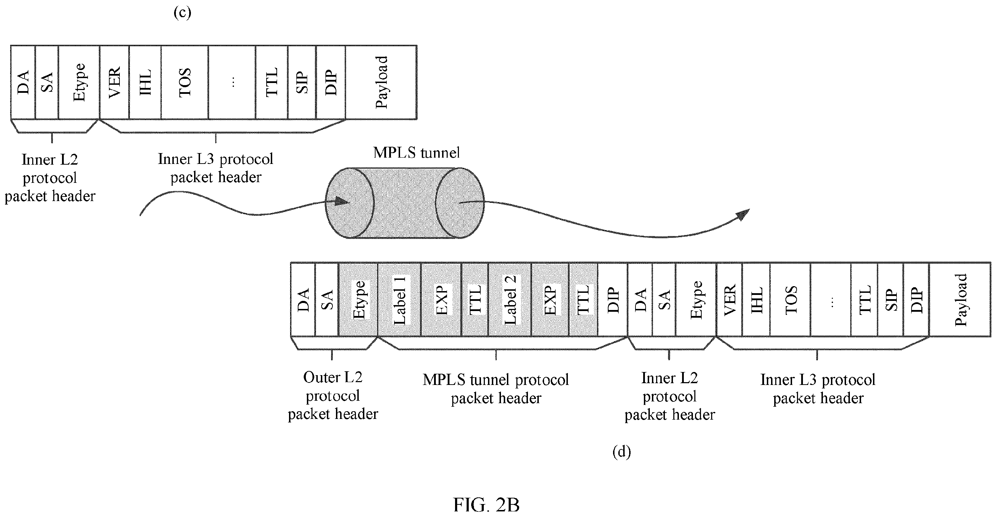

FIG. 2B is a schematic diagram of another application scenario of packet encapsulation according to this application. It can be learned from a part (c) and a part (d) in FIG. 2B that, before a to-be-encapsulated data packet enters a multi-protocol label switching (multi-protocol label switching, MPLS) network for transmission, an MPLS network ingress device modifies an inner L3 protocol packet header, and adds an inner L2 protocol packet header. In addition, during transmission in an MPLS tunnel, an outer L2 protocol packet header and an MPLS tunnel protocol packet header are further added. The MPLS tunnel protocol packet header includes one or more of labels allocated by a network element on a transmission path of each node in the MPLS network to a previous-hop node, and the outer L2 protocol packet header carries source MAC address information and destination MAC address information of two adjacent network elements on a transmission path.

Compared with the part (c) that shows the protocol packet headers, the part (d) further shows a change status of a field in each protocol packet header before the data packet enters the MPLS tunnel and after the data packet passes through the MPLS tunnel. For example, the fields include an Etype field in the outer L2 protocol packet header, and a label 1 (Label 1) field, an experimentation (experimentation, EXP) field, a TTL field, and a label 2 field in the MPLS tunnel protocol packet header.

In other words, it can be learned from FIG. 2A and FIG. 2B that when the to-be-encapsulated data packet is transmitted in different tunnels, packet headers of different protocol types need to be encapsulated. In addition, in different scenarios, a value of a field in a same protocol packet header also varies based on impact of a forwarding status.

Based on this, an embodiment of this application provides a packet processing method, to implement mapping on service data encapsulated by using different protocols, achieve high flexible scalability, and reduce resource consumption and implementation costs. The packet processing method may be applied to a packet processing apparatus. The packet processing apparatus may include a network device such as a router or a switch, or may be applied to a network element that needs to perform service encapsulation, for example, user equipment, a server, or a software-defined network (software-defined network, SDN) controller. The user equipment may include but is not limited to a personal computer, a mobile phone, a tablet computer, and the like. In addition, the packet processing method may also be applied to the application scenarios shown in FIG. 2A and FIG. 2B, or may be applied to another scenario. This is not limited in this application.

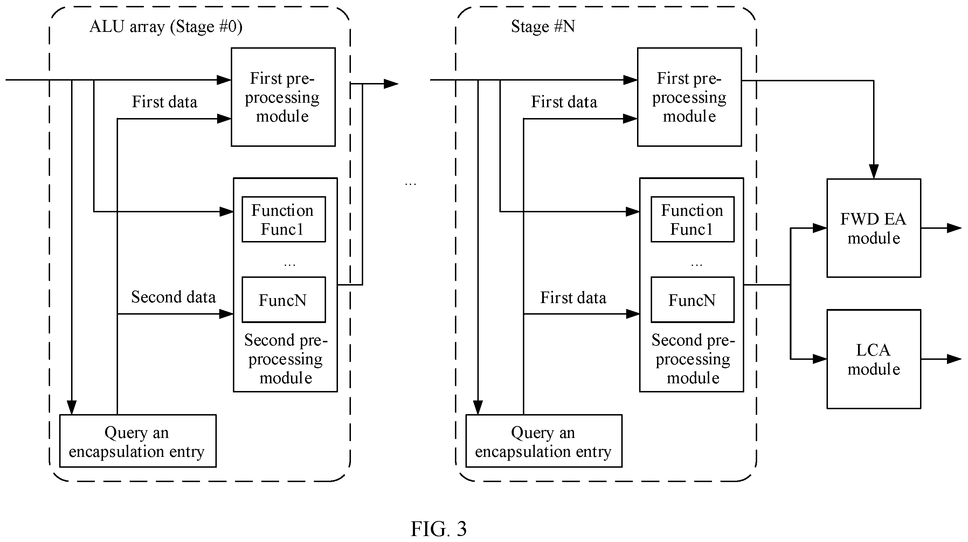

FIG. 3 is a schematic diagram of a packet processing system framework according to an embodiment of this application. As shown in FIG. 3, the system framework includes at least one stage (stage) of ALU array (for example, Stage #0, ..., and Stage #N), a forwarding encapsulation accelerate (forwarding encapsulation accelerate, FWD EA) module, and a length calculation accelerate (length calculation accelerate, LCA) module. Each stage of ALU array includes a first pre-processing module and a second pre-processing module. The first pre-processing module and the second pre-processing module process different data. For example, the first pre-processing module processes static data, and the second pre-processing module processes dynamic data. The static data is data that is in a to-be-encapsulated packet and that does not change in a forwarding process, and the dynamic data is data that is in the to-be-encapsulated packet and that changes in the forwarding process. An example in which the first pre-processing module processes the static data and the second pre-processing module processes the dynamic data is used below for description. In this case, the first pre-processing module is referred to as a static data pre-processing module, and the second pre-processing module is referred to as a dynamic data pre-processing module. For different protocol packet headers that need to be used when the to-be-forwarded packet is encapsulated, static data and dynamic data in each protocol packet header may be determined based on a change of the to-be-encapsulated packet during forwarding, that is, first data and second data are obtained. The first data includes static data in the to-be-encapsulated packet, that is, the first data includes pre-configured field data that does not change with forwarding. The second data includes dynamic data, that is, the second data includes field data that is in the to-be-encapsulated packet and that changes with forwarding behavior. In some embodiments, the second data is not limited to preset current dynamic data that changes as the to-be-encapsulated packet is forwarded, and may further include data obtained by calculating the current second data based on control information of the protocol packet header. In each stage of ALU array, field data division is performed on the to-be-forwarded packet, to obtain the first data and the second data. The static data pre-processing module processes the first data, so that the first data can be mapped to a corresponding protocol packet header that needs to be encapsulated. Similarly, the dynamic data pre-processing module processes the second data, and inputs the second data processed by the dynamic data pre-processing module into the FWD EA module and the LCA module. The FWD EA module can map the second data to a protocol packet header that needs to be encapsulated, and the LCA module can also process the second data processed by the dynamic data pre-processing module, to calculate length change information mapped to a corresponding protocol packet header. In this way, after data in different protocol packet headers is divided into dynamic data and static data, two steps, that is, dynamic data mapping and static data mapping, are performed to obtain a target packet header that is finally encapsulated into the data packet, so as to encapsulate the to-be-encapsulated data packet.

It should be noted that a stage quantity of the ALU array may be set based on an actual service requirement. This is not specifically limited herein. For example, if encapsulation and decoupling of an outer protocol packet header and an inner protocol packet header need to be implemented, a plurality of stages of ALU arrays may be disposed, so that each stage of ALU array can process different protocol packet headers. In addition, the scenario described in FIG. 2A and the scenario described in FIG. 2B are merely described as examples. In actual application, another application scenario may be further included. This is not limited herein.

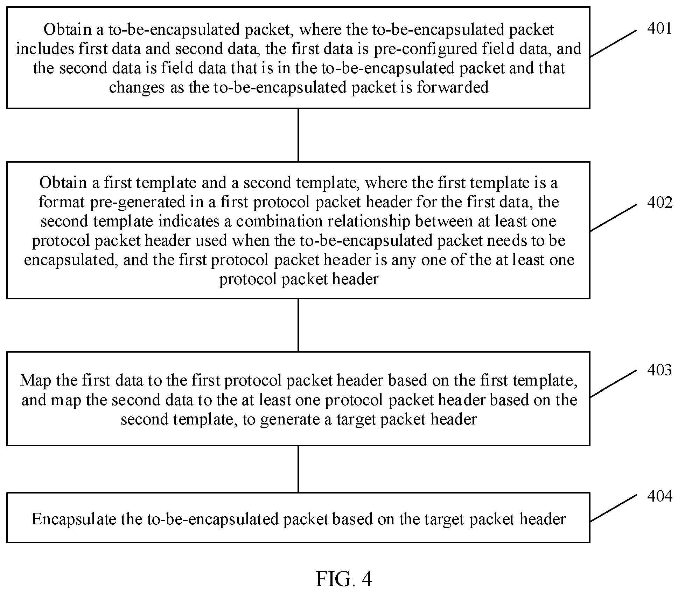

FIG. 4 is a schematic flowchart of a packet processing method according to an embodiment of this application. As shown in FIG. 4, the packet processing method includes the following steps.

401: Obtain a to-be-encapsulated packet, where the to-be-encapsulated packet includes first data and second data, the first data is pre-configured field data, and the second data is field data that is in the to-be-encapsulated packet and that changes as the to-be-encapsulated packet is forwarded.

In this example, an encapsulation entry of the to-be-encapsulated packet includes field data in a protocol packet header that needs to be encapsulated, for example, a destination address, a source address, and a version that are used to describe the to-be-encapsulated packet, and some control information of data that needs to be processed, for example, whether a value in a TTL field is subtracted by 1, and whether a TOS field is configured or inherited. Therefore, the to-be-encapsulated packet is obtained, and field data in different protocol packet headers that is in the encapsulation entry corresponding to the to-be-encapsulated packet is divided into two parts the first data and the second data. The first data is the pre-configured field data, or the first data is field data that is in the to-be-encapsulated packet and that does not change as the to-be-encapsulated packet is forwarded. The second data may be understood as the field data that is in the to-be-encapsulated packet and that changes as the to-be-encapsulated packet is forwarded. In some embodiments, the second data is not limited to dynamic data in the encapsulation entry, and may further include data obtained by calculating the current second data based on control information of the protocol packet header.

That the packet is forwarded affects which field data needs to be filled in different protocol packet headers and how the filled field data is encapsulated into a required protocol packet header. Therefore, the field data in the different protocol packet headers may be divided in the following manner: Forwarding information of the to-be-encapsulated packet is obtained, and field data in at least one protocol packet header is divided based on the forwarding information, to obtain the first data and the second data. In some embodiments, the forwarding information may reflect intermediate nodes, links, and/or devices corresponding to prefix information through which the to-be-encapsulated packet needs to pass from a source end device before the to-be-encapsulated packet is forwarded to a destination device. For different forwarding information, field values corresponding to some field data in the at least one protocol packet header also change, but field values corresponding to the other field data do not change. Therefore, after the forwarding information of the to-be-encapsulated packet is obtained, the field data in the at least one protocol packet header that is used when the to-be-encapsulated packet needs to be encapsulated is divided based on the forwarding information, to obtain the first data and the second data.

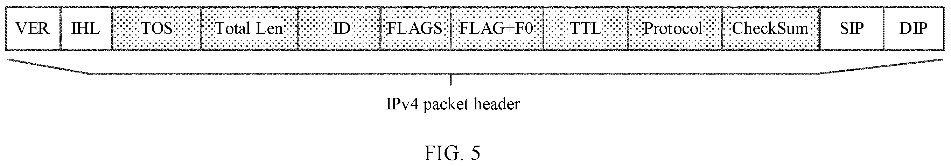

For example, FIG. 5 is a schematic diagram of a structure of a protocol packet header. As shown in FIG. 5, for example, the protocol packet header is an IPv4 packet header. Field data in the IPv4 packet header includes VER, IHL, TOS, a total data packet length (Total Len), an identifier ID, flags (FLAGS), a flag and fragment offset (FLAG+F0), TTL, a transmission protocol (Protocol), a packet header checksum (CheckSum), SIP, and DIP.

The field data, that is, VER, IHL, SIP, and DIP, in FIG. 5 is configured by a user based on an actual service requirement, and does not change with forwarding behavior of the to-be-encapsulated packet.

As a length of the to-be-encapsulated packet changes, a field value corresponding to the total data packet length (Total Len) field data also changes. Similarly, each time the to-be-encapsulated packet is forwarded, a field value corresponding to the TTL field data needs to be modified, that is, the field value corresponding to the TTL field data is subtracted by 1, so that the packet can be forwarded, and ID, FLAGS, FLAG+F0, and CheckSum are modified. In addition, when different transmission protocols are used for forwarding, a field value corresponding to the Protocol field data is also modified. To be specific, each time the to-be-encapsulated packet is forwarded, field values corresponding to the field data, that is, Total Len, ID, FLAGS, FLAG+F0, TTL, Protocol, and CheckSum, need to be recalculated. Therefore, it may be understood that the field data, that is, Total Len, ID, FLAGS, FLAG+F0, TTL, Protocol, and CheckSum, in the to-be-encapsulated packet changes as the to-be-encapsulated packet is forwarded. Based on this, the field data, that is, VER, IHL, SIP, and DIP, in the IPv4 packet header may be used as the first data, and the field data, that is, Total Len, ID, FLAGS, FLAG+F0, TTL, Protocol, and CheckSum, in the IPv4 packet header may be used as the second data.

It should be noted that in FIG. 5, the IPv4 packet header is merely used as an example to describe how to divide the field data in the protocol packet header. In actual application, in addition to the IPv4 packet header shown in FIG. 5, any one of the at least one protocol packet header may further include but is not limited to the outer L2 protocol packet header, the inner L3 protocol packet header, the inner L2 protocol packet header, the VXLAN tunnel protocol packet header, and the like shown in FIG. 2A, and include but is not limited to the outer L2 protocol packet header, the inner L3 protocol packet header, the inner L2 protocol packet header, the MPLS tunnel protocol packet header, and the like shown in FIG. 2B, or an IPv6 packet header. This is not limited herein.

402: Obtain a first template and a second template, where the first template is a format pre-generated in a first protocol packet header for the first data, the second template indicates a combination relationship between the at least one protocol packet header used when the to-be-encapsulated packet needs to be encapsulated, and the first protocol packet header is any one of the at least one protocol packet header.

The first data is the pre-configured field data, and the second data is the field data that changes as the to-be-encapsulated packet is forwarded. Therefore, the first data and the second data may be respectively mapped to corresponding protocol packet headers based on different templates. The following first describes how to obtain the first template used when the first data is mapped.

First data in each protocol packet header is pre-configured field data, and the first data does not change as a packet is forwarded. Therefore, a first template may be pre-configured for the first data in each protocol packet header, so that the first template can indicate a format pre-generated in the first protocol packet header for the first data. In this way, a first index associated with the first template is stored in the encapsulation entry, so that after the encapsulation entry is obtained, the first index associated with the first template can be known. In this way, the first template pre-configured for the first data in each first protocol packet header is obtained through the first index.

The scenario in FIG. 2A is used as an example. During encapsulation of the to-be-encapsulated packet, the inner L3 protocol packet header needs to be modified, and the inner L2 protocol packet header, the VXLAN tunnel protocol packet header, and the outer L2 protocol packet header need to be added. In the VXLAN tunnel protocol packet header, the first data includes information, such as VER, IHL, SIP, DIP, and a destination port (destination port, DPORT), used to encapsulate a VXLAN tunnel. In the outer L2 protocol packet header and the inner L2 protocol packet header, the first data includes information such as DA and SA.

In this case, a first template A is configured for the first data in the VXLAN tunnel protocol packet header, so that the first template A can indicate a format pre-generated in the inner L3 protocol packet header for the first data, that is, VER, IHL, SIP, DIP, and DPORT. In addition, a first index a corresponding to the first template A is stored in the encapsulation entry. After the encapsulation entry is obtained, the first index a is known, so that the first template A can be obtained through the first index a.

Similarly, a first template B is configured for the first data (that is, DA and SA) in the outer L2 protocol packet header, so that the first template B can indicate a format pre-generated in the outer L2 protocol packet header for the first data, that is, DA and SA. In addition, a first index b associated with the first template B is stored in the encapsulation entry. The encapsulation entry is queried, so that the first template B can be obtained through the first index b.

In some possible examples, the packet processing method may further include: determining a first adjustment factor and/or a second adjustment factor, where the first adjustment factor is used to adjust an offset of the first data in the first protocol packet header when the first data is affected by encapsulation of a previous-stage encapsulation entry, and the second adjustment factor is used to select the first data that meets a preset condition; and then processing the first template based on the first adjustment factor and/or the second adjustment factor, to obtain an adjusted first template.

In this example, if the first data is affected by previous-stage forwarding behavior in a current encapsulation process, and the first data continues to be mapped to the first protocol packet header by using the pre-configured first template, it is very likely that the first data cannot be accurately mapped to a correct location in the first protocol packet header. Therefore, the first adjustment factor may be determined based on encapsulation information in the previous-stage encapsulation entry. For example, in the MPLS forwarding scenario shown in FIG. 2B, a virtual private network (virtual private network, VPN) label is configured in an encapsulation entry 1, and an MPLS tunnel label is configured in an encapsulation entry 2. When the foregoing first template is obtained based on a first index in the encapsulation entry 2, whether the encapsulation entry 1 carries an encapsulation label, for example, a VPN label, needs to be considered. If the encapsulation entry 1 carries the VPN label, the first adjustment factor needs to be determined based on encapsulation information in the encapsulation entry 1, for example, how many layers of label information are encapsulated. The first adjustment factor herein may be directly set in the encapsulation entry 1 and transmitted to the encapsulation entry 2. After the pre-configured first template is adjusted based on the first adjustment factor, the first data can be accurately mapped to the first protocol packet header based on the adjusted first template, and a problem of encapsulation coupling between the previous-stage encapsulation entry 1 and the current-stage encapsulation entry 2 is resolved. It should be noted that the encapsulation entry 1 and the encapsulation entry 2 herein are merely described as examples.

Similarly, for the first data that is in each protocol packet header and that is obtained through division, only a part of the first data needs to be mapped to a corresponding protocol packet header, and the other part of the first data does not need to be mapped to a corresponding protocol packet header. In this case, the second adjustment factor may be determined from overall configuration information, or the second adjustment factor is determined in a process of obtaining the second template at a previous stage. The first data that meets the preset condition can be selected from all first data based on the second adjustment factor. In this way, after the pre-configured first template is adjusted based on the second adjustment factor, only the selected first data can be accurately mapped to a corresponding protocol packet header by using the adjusted first template.

It should be noted that, the processing the first template based on the first adjustment factor and/or the second adjustment factor, to obtain an adjusted first template may be specifically understood as the following three manners: □ The first template is processed based on the first adjustment factor to obtain the adjusted first template. □ The first template is processed based on the second adjustment factor to obtain the adjusted first template. □ The first template is processed based on the first adjustment factor and the second adjustment factor to obtain the adjusted first template. A specific processing manner may be determined based on an actual service requirement. This is not limited herein.

The following describes how to obtain the second template used when the second data is mapped.

In different encapsulation scenarios, at least one protocol packet header used for encapsulating the to-be-encapsulated packet is different, and second data in each protocol packet header changes as a packet is forwarded. Therefore, the second data may be mapped to the at least one protocol packet header by using one second template. Specifically, the second template may be obtained by using control information of each of the at least one protocol packet header, so that the second template can indicate a combination relationship of the second data in the at least one protocol packet header.

It should be noted that the control information can be used to describe an attribute of a protocol packet header. For example, the control information may include information used to describe a forwarding path of the to-be-encapsulated packet, and/or description information of an encapsulated packet header. The information used to describe the forwarding path of the to-be-encapsulated packet may include whether an L2 packet enters a VXLAN tunnel, or the like. The description information of the encapsulated packet header may include but is not limited to an MPLS tunnel protocol packet header, an inner L2 protocol packet header, whether the to-be-encapsulated packet carries VLAN information, or the like. This is not limited herein.

The scenario in FIG. 2A is used as an example. During encapsulation of the to-be-encapsulated packet, the inner L3 protocol packet header needs to be modified, and the inner L2 protocol packet header, the VXLAN tunnel protocol packet header, and the outer L2 protocol packet header need to be added. In the inner L3 protocol packet header, the second data includes field data, that is, Total Len, ID, FLAGS, FLAG+F0, TTL, Protocol, and CheckSum. In the inner L2 protocol packet header, the second data includes field data, that is, Etype. In the VXLAN tunnel protocol packet header, the second data includes field data, that is, Total Len, ID, FLAGS, FLAG+F0, TTL, Protocol, CheckSum, SP, and the like. In the outer L2 protocol packet header, second data includes field data, that is, Etype.

Control information of the inner L3 protocol packet header may reflect an attribute of the inner L3 protocol packet header, control information of the inner L2 protocol packet header may reflect an attribute of the inner L2 protocol packet header, control information of the VXLAN tunnel protocol packet header may reflect an attribute of the VXLAN tunnel protocol packet header, and control information of the outer L2 protocol packet header may reflect an attribute of the outer L2 protocol packet header. Therefore, after the control information of the inner L3 protocol packet header, the control information of the inner L2 protocol packet header, the control information of the VXLAN tunnel protocol packet header, and the control information of the outer L2 protocol packet header are obtained, the second template may be obtained based on the control information of the inner L3 protocol packet header, the control information of the inner L2 protocol packet header, the control information of the VXLAN tunnel protocol packet header, and the control information of the outer L2 protocol packet header. Therefore, the second template can reflect a combination relationship between the inner L3 protocol packet header, the inner L2 protocol packet header, the VXLAN tunnel protocol packet header, and the outer L2 protocol packet header, and further reflect formats pre-generated in the four protocol packet headers for the second data.

Alternatively, in some encapsulation scenarios, when only the outer L2 protocol packet header, the inner L2 protocol packet header, and the inner L3 protocol packet header need to be used to encapsulate the to-be-encapsulated packet, the second template may be obtained by using the control information of the three protocol packet headers. This is not limited herein.

403: Map the first data to the first protocol packet header based on the first template, and map the second data to the at least one protocol packet header based on the second template, to generate a target packet header.

In this example, after the first template is obtained, the first data may be mapped to the corresponding first protocol packet header. The second data is the field data that is in the to-be-encapsulated packet and that changes as the to-be-encapsulated packet is forwarded. Therefore, when a corresponding packet header is generated based on the second data, all second data needs to be mapped to the at least one protocol packet header based on the second template. In this way, a complete target packet header can be generated only after the first data and the second data are mapped, and then the to-be-encapsulated packet is encapsulated by using the target packet header.

Two steps, that is, mapping the first data and mapping the second data, may be performed to generate the complete target packet header. The following first describes how to map the first data to the first protocol packet header.

The first data may be mapped to the first protocol packet header based on the first template in the following manner: A first mapping parameter is determined from the encapsulation entry based on the first template, where the first mapping parameter is used to indicate a location of the first data in the first protocol packet header. The first data is mapped to the first protocol packet header based on the first mapping parameter.

In this example, because the encapsulation entry carries the first template, the first mapping parameter can be obtained based on the first template or the adjusted first template, and the first mapping parameter can be used to indicate the location of the first data in the first protocol packet header. Therefore, in a process of mapping the first data to the first protocol packet header based on the first template, the first mapping parameter, for example, information about a destination location at which each piece of first data is correspondingly mapped to the first protocol packet header and/or mask information, may be first determined from the encapsulation entry based on the first template. Then, the corresponding first data is mapped to a corresponding location in the first protocol packet header based on the found first mapping parameter, so that the first data can be filled in the first protocol packet header. In addition, for the first template, refer to content in step 402 for understanding. Details are not described herein again.

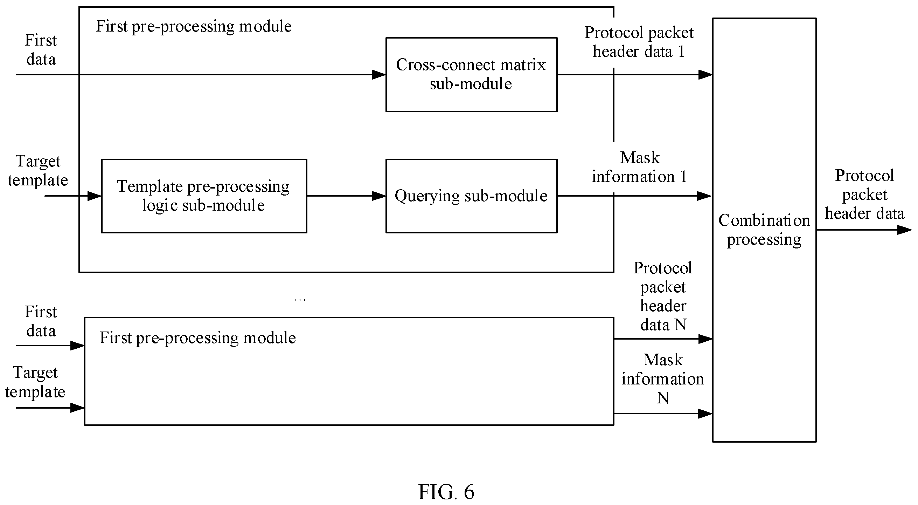

FIG. 6 is a schematic diagram of a structure of mapping first data according to this application. As shown in FIG. 6, a mapping operation of the first data may be implemented by the first pre-processing module shown in FIG. 3. Specifically, the first pre-processing module includes a cross-connect matrix sub-module, a querying sub-module, and a template pre-processing logic sub-module. The template pre-processing logic sub-module is configured to obtain a target template. The target template may be the first template shown in step 402, or a first template obtained by adjusting the first template. After obtaining the target template from the template pre-processing logic sub-module, the querying sub-module queries a cross-connect matrix configuration information table by using the target template to obtain a cross-connect matrix configuration parameter, that is, the first mapping parameter. In addition, the cross-connect matrix sub-module maps, based on the first mapping parameter obtained from the querying sub-module, the first data obtained from the encapsulation entry to the first protocol packet header.

In addition, it can be further learned from FIG. 6 that, after the first data is mapped to the corresponding protocol packet header by using each target template, protocol packet headers obtained through mapping may be further combined by using mask information configured at each stage, to generate the protocol packet header filled with the first data.

The following describes how to map the second data to the at least one protocol packet header.

The second data may be mapped to the at least one protocol packet header based on the second template in the following manner: A second mapping parameter is determined from the encapsulation entry based on the second template, where the second mapping parameter is used to indicate a location of the second data in the at least one protocol packet header. The second data is mapped to the at least one protocol packet header based on the second mapping parameter.

In this example, because the encapsulation entry carries control information of each protocol packet header, the second template can be obtained by using control information of all protocol packet headers, and the second mapping parameter can be obtained by using the second template. The second mapping parameter can be used to indicate the location of the second data in the at least one protocol packet header. Therefore, after the second template is obtained based on the control information of each protocol packet header, in a process of mapping the second data to the at least one protocol packet header based on the second template, the second mapping parameter, for example, information about a destination location at which each piece of second data is correspondingly mapped to each protocol packet header and/or mask information, may be first determined from the encapsulation entry based on the second template. Then, the corresponding second data is mapped to a corresponding location in each protocol packet header based on the found second mapping parameter, so that the second data can be filled.

It should be noted that, the first data may be first mapped to the first protocol packet header based on the first template, and then the second data may be mapped, based on the second template, to the at least one protocol packet header filled with the first data. Alternatively, the second data may be mapped to the at least one protocol packet header based on the second template, and then the corresponding first data may be mapped, based on the first template, to each protocol packet header filled with the second data. A specific manner is not limited herein. In addition, for the second template, the control information, and the like, refer to content in step 402 for understanding. Details are not described herein again.

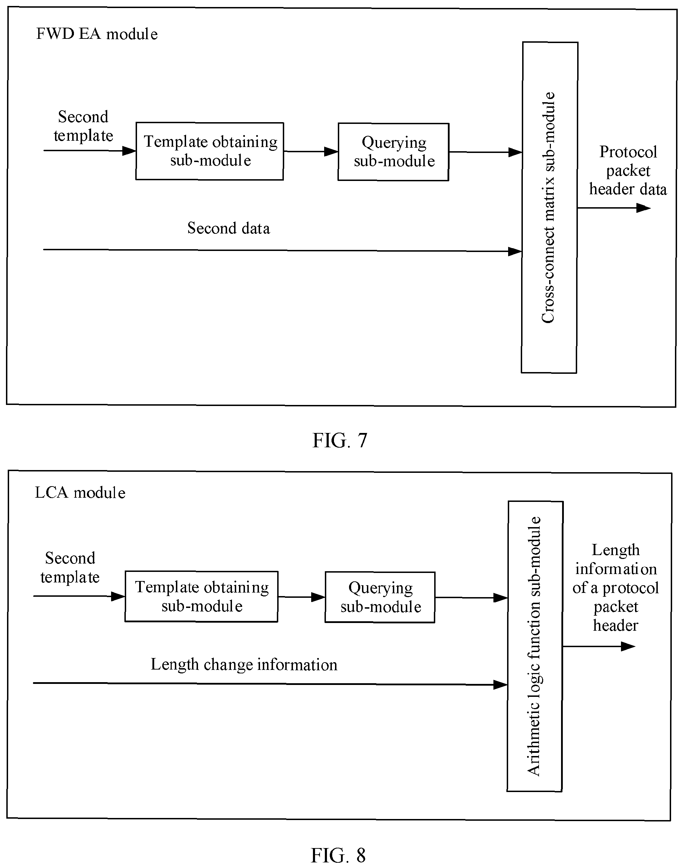

FIG. 7 is a schematic diagram of a structure of mapping second data according to this application. As shown in FIG. 7, a mapping operation of the second data may be implemented by the FWD EA module shown in FIG. 3. Specifically, the FWD EA module includes a cross-connect matrix sub-module, a querying sub-module, and a template obtaining sub-module. The template obtaining sub-module is configured to obtain the second template based on control information of each protocol packet header. The querying sub-module is configured to: after obtaining the second template from the template obtaining sub-module, query a cross-connect matrix configuration information table by using the second template to obtain a cross-connect matrix configuration parameter, that is, the second mapping parameter. In addition, the cross-connect matrix sub-module is configured to map the obtained second data to each final protocol packet header based on the second mapping parameter obtained from the querying sub-module.

It should be noted that the template obtaining sub-module shown in FIG. 7 may be specifically implemented by a ternary content addressable memory (ternary content addressable memory, TCAM) module or the second pre-processing module shown in FIG. 3 to obtain the second template, or may obtain the second template in a manner such as programmable calculation. This is not specifically limited herein.

In some other possible examples, when field data in each protocol packet header is divided, whether each piece of second data is valid is also identified. Therefore, in a process of mapping the second data to the at least one protocol packet header based on the second mapping parameter, the second data may be specifically mapped to the at least one protocol packet header based on the second mapping parameter and valid information. The valid information can indicate validity of the second data. In this way, only valid second data needs to be mapped to the protocol packet header, and other invalid second data is discarded, so that processing efficiency is higher.

404: Encapsulate the to-be-encapsulated packet based on the target packet header.

In this example, after the first data and the second data are mapped in two steps to protocol packet headers that need to be used for encapsulation, the target packet header that can be finally used to encapsulate the to-be-encapsulated packet can be constructed. In this way, the target packet header is added to a header of the to-be-encapsulated packet, so that the to-be-encapsulated packet is encapsulated.

In some possible examples, length information of the target packet header further needs to be known for encapsulating the to-be-encapsulated packet. The length information of the target packet header may reflect a quantity of bytes of field data that needs to be added or a quantity of bytes of field data that needs to be removed when the to-be-encapsulated packet is encapsulated. This is applicable to a scenario in which a packet header length changes in different encapsulation manners. Therefore, the packet processing method may further include: obtaining at least one first identifier and length change information of each protocol packet header based on the second template, where each of the at least one first identifier is used to identify calculation logic used to process a corresponding protocol packet header; determining the length information of the target packet header based on each first identifier and the length change information of each protocol packet header; and then encapsulating the to-be-encapsulated packet based on the target packet header and the length information of the target packet header.

FIG. 8 is a schematic diagram of a structure of determining length information of a packet header according to this application. As shown in FIG. 8, determining the length information of the target packet header may be implemented by the LCA module shown in FIG. 3. Specifically, the LCA module includes an arithmetic logic function sub-module, a querying sub-module, and a template obtaining sub-module.

The template obtaining sub-module is configured to obtain the second template based on control information of each protocol packet header. For details, refer to content shown in FIG. 7 for understanding. The querying sub-module is configured to: after obtaining the second template from the template obtaining sub-module, query a cross-connect matrix configuration information table by using the second template to obtain length change information of each protocol packet header and a corresponding first identifier. The first identifier can identify calculation logic used to process the corresponding protocol packet header, for example, an addition operation or a subtraction operation. For example, if five protocol packet headers are required to encapsulate the to-be-encapsulated packet, each protocol packet header has length change information. One protocol packet header corresponds to one first identifier. For example, "1" may identify that subsequent calculation logic of a protocol packet header is an addition operation, and "0" may identify that subsequent calculation logic of a protocol packet header is a subtraction operation. In this application, using "1" or "0" to define calculation logic identified by the first identifier is merely an example for description. In actual application, another parameter may be used to identify calculation logic. This is not specifically limited.

In this way, the arithmetic logic function sub-module can perform, based on an indication of each first identifier, an addition operation or a subtraction operation on length change information that is of the protocol packet header and that corresponds to each first identifier, to determine the length information of the target packet header. Finally, the to-be-encapsulated packet is encapsulated based on the target packet header and the length information of the target packet header. This can improve length change flexibility of the protocol packet header in different encapsulation manners.

In some other possible examples, after each piece of second data is mapped to the at least one protocol packet header, there may be hole information between every two adjacent protocol packet headers. For example, a protocol packet header A and a protocol packet header B are two adjacent packet headers, and a tail of the protocol packet header A has some null field data. Therefore, the protocol packet header B can be combined with the protocol packet header A only when the protocol packet header B is at a long distance from the protocol packet header A. Therefore, to remove hole information between protocol packet headers, the packet processing method may further include: obtaining description information of each protocol packet header from the control information of each protocol packet header; and concatenating the at least one protocol packet header based on the description information of each protocol packet header. It should be noted that the described description information of each protocol packet header may reflect an attribute of each protocol packet header. For example, description information of a VXLAN tunnel protocol packet header may indicate that a currently used packet header is the VXLAN tunnel protocol packet header.

It should be noted that the second pre-processing module described in FIG. 3 may also be replaced with a logic circuit that performs function abstraction. Function abstraction refers to classification of all protocol functions that need to be encapsulated. Functions of a same protocol can be classified into one type and implemented by a unified logic circuit. For example, TTL processing in a L3 protocol packet header and/or SL processing in an SRV6 protocol are/is essentially to perform a subtraction operation on a field value. Therefore, only one subtraction logic circuit may be designed to fixedly perform a subtraction operation on input field data as required and output the input field data. Subsequent processing is performed by the FWD EA module on a field value corresponding to the output field data. In addition, functions that are of different protocols and that have a same feature are abstracted and then implemented by a unified circuit. Differences between the protocols are eliminated by using the FWD EA module. The FWD EA module can be essentially configured to implement any cross-connection. Therefore, the FWD EA module is still highly flexible and scalable in terms of functions.

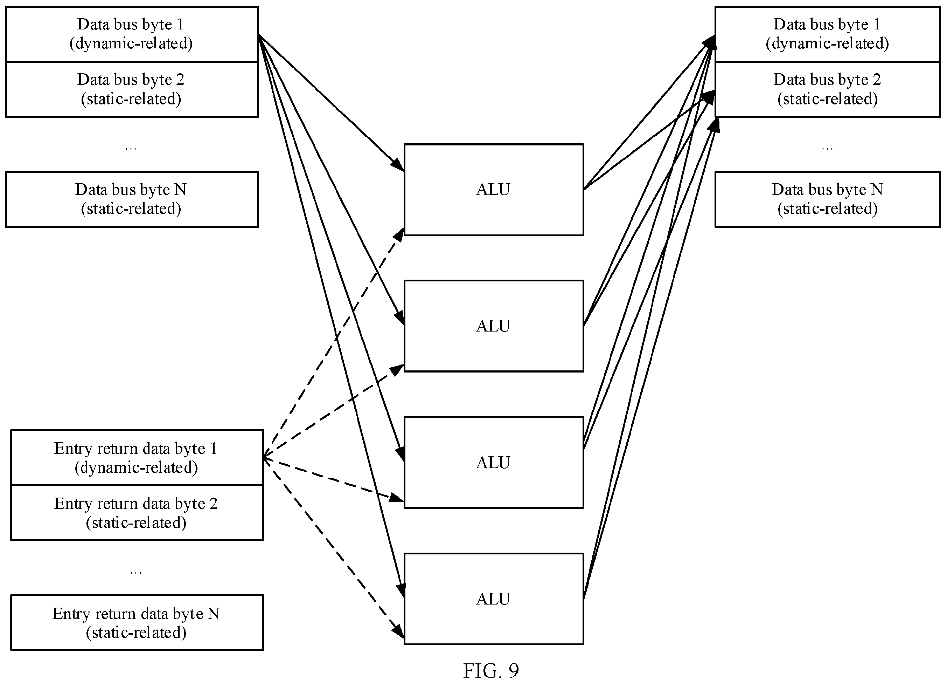

In embodiments of this application, the field data in each protocol packet header is divided into the first data and the second data, the first data is mapped to the corresponding first protocol packet header based on the first template, and the second data is mapped to the at least one protocol packet header based on the second template, to generate the target packet header, so that the to-be-encapsulated packet is encapsulated. FIG. 9 is a schematic diagram of reducing an amount of exchanged data after a packet processing method according to this application is applied. Compared with the schematic diagram of data exchange shown in FIG. 1B, it can be learned from FIG. 9 that, in each stage of ALU array (for example, Stage #0, ..., and Stage #N), after dynamic and static classification is performed on field data, first data and second data are mapped in two steps. Only first data in each protocol packet header needs to be processed by using a related static data processing module, and second data in all protocol packet headers needs to be processed by using a related dynamic data processing module. An amount of data exchanged between the two modules is reduced, so that an amount of field data exchanged in a system is greatly reduced, to avoid full-space access to all field data, reduce physical implementation costs, and facilitate physical implementation of a chip. In addition, the first data and the second data are mapped to different protocol packet headers in a template manner, so that encapsulation in different protocols can also be implemented, and sufficient flexibility is provided.

The foregoing mainly describes the solutions provided in embodiments of this application from a perspective of the method. It may be understood that, to implement the foregoing functions, the foregoing packet processing apparatus includes corresponding hardware structures and/or software modules for performing the functions. A person skilled in the art should be easily aware that, in combination with functions described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Descriptions are provided from a perspective of a physical device. The packet processing apparatus may be specifically implemented by one physical device, or may be jointly implemented by a plurality of physical devices, or may be a logical functional unit in one physical device. This is not specifically limited in embodiments of this application.

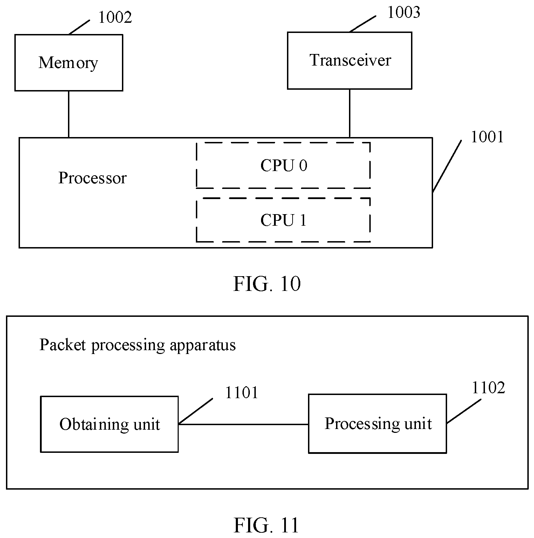

For example, the foregoing packet processing apparatus may be implemented by a communications device in FIG. 10. FIG. 10 is a schematic diagram of a hardware structure of a communications device according to an embodiment of this application. The communications device includes at least one processor 1001, a memory 1002, and a transceiver 1003.

The processor 1001 may be a general-purpose central processing unit CPU, a microprocessor, an application-specific integrated circuit (application-specific integrated circuit), or one or more integrated circuits configured to control program execution of the solutions in this application. The processor 1001 can perform operations such as determining, analysis, and an operation, including: mapping first data to a first protocol packet header based on a first template, and mapping second data to at least one protocol packet header based on a second template, to generate a target packet header; and encapsulating a to-be-encapsulated packet based on the target packet header.

The transceiver 1003 is any apparatus such as a transceiver, and is configured to communicate with another device or a communications network such as Ethernet, a radio access network (radio access network, RAN), or a wireless local area network (wireless local area network, WLAN). The transceiver 1003 may be connected to the processor 1001. The transceiver 1003 may obtain an encapsulation entry of the to-be-forwarded packet, or may obtain the first template, the second template, and the like.

The memory 1002 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or may be any other medium that can be used to carry or store expected program code in a form of an instruction or a data structure and that can be accessed by a computer. However, this is not limited thereto. The memory 1002 may exist independently, or may be connected to the processor 1001. Alternatively, the memory 1002 may be integrated with the processor 1001.

The memory 1002 is configured to store computer-executable instructions for executing the solutions in this application, and the execution is controlled by the processor 1001. The processor 1001 is configured to execute the computer-executable instructions stored in the memory 1002, to implement the packet processing method according to the foregoing method embodiment of this application.

In a possible implementation, the computer-executable instructions in embodiments of this application may also be referred to as application code. This is not specifically limited in embodiments of this application.

In a specific implementation, in an embodiment, the processor 1001 may include one or more CPUs, for example, a CPU 0 and a CPU 1 in FIG. 10.

From a perspective of functional units, in this application, the packet processing apparatus may be divided into functional units based on the foregoing method embodiment. For example, each functional unit may be obtained through division based on a corresponding function, or two or more functions may be integrated into one functional unit. The integrated functional unit may be implemented in a form of hardware, or may be implemented in a form of a software functional unit.

For example, when the functional units are obtained through division in an integrated manner, FIG. 11 is a schematic diagram of a structure of a packet processing apparatus according to an embodiment of this application. As shown in FIG. 11, an embodiment of the packet processing apparatus in this application may include an obtaining unit 1101 and a processing unit 1102.

The obtaining unit 1101 is configured to obtain a to-be-encapsulated packet. The to-be-encapsulated packet includes first data and second data, the first data is pre-configured field data, and the second data is field data that is in the to-be-encapsulated packet and that changes as the to-be-encapsulated packet is forwarded. For a specific implementation, refer to the detailed descriptions of step 401 in FIG. 4. Details are not described herein again.

The obtaining unit 1101 is further configured to obtain a first template and a second template. The first template indicates a format pre-generated in a first protocol packet header for the first data, the second template indicates a combination relationship between the at least one protocol packet header used when the to-be-encapsulated packet needs to be encapsulated, and the first protocol packet header is any one of the at least one protocol packet header. For a specific implementation, refer to the detailed descriptions of step 402 in FIG. 4. Details are not described herein again.

The processing unit 1102 is configured to: map the first data to the first protocol packet header based on the first template, and map the second data to the at least one protocol packet header based on the second template, to generate a target packet header. For a specific implementation, refer to the detailed descriptions of step 403 in FIG. 4. Details are not described herein again.

The processing unit 1102 is further configured to encapsulate the to-be-encapsulated packet based on the target packet header. For a specific implementation, refer to the detailed descriptions of step 404 in FIG. 4. Details are not described herein again.

the obtaining unit 1101 is further configured to obtain the first template based on a first index in an encapsulation entry. The processing unit 1102 is configured to: determine a first mapping parameter from the encapsulation entry based on the first template, where the first mapping parameter is used to indicate a location of the first data in the first protocol packet header; and map the first data to the first protocol packet header based on the first mapping parameter. For a specific implementation, refer to the detailed descriptions of step 402 and step 403 in FIG. 4. Details are not described herein again.

the processing unit 1102 is further configured to determine a first adjustment factor and/or a second adjustment factor. The first adjustment factor is used to adjust an offset of the first data in the first protocol packet header when the first data is affected by encapsulation of a previous-stage encapsulation entry, and the second adjustment factor is used to select the first data that meets a preset condition. In addition, the processing unit 1102 is further configured to process the first template based on the first adjustment factor and/or the second adjustment factor, to obtain an adjusted first template. For a specific implementation, refer to the detailed descriptions of step 402 in FIG. 4. Details are not described herein again.

the obtaining unit 1101 is further configured to: obtain control information of each of the at least one protocol packet header, where each piece of control information is used to describe an attribute of a corresponding protocol packet header; and obtain the second template based on the control information of each protocol packet header. The processing unit 1102 is configured to: determine a second mapping parameter from the encapsulation entry based on the second template, where the second mapping parameter is used to indicate a location of the second data in the at least one protocol packet header; and map the second data to the at least one protocol packet header based on the second mapping parameter. For a specific implementation, refer to the detailed descriptions of step 402 and step 403 in FIG. 4. Details are not described herein again.

In some other optional embodiments, the obtaining unit 1101 is further configured to obtain at least one first identifier and length change information of each protocol packet header based on the second template, where each of the at least one first identifier is used to identify calculation logic used to process a corresponding protocol packet header. The processing unit 1102 is further configured to: determine length information of the target packet header based on each first identifier and the length change information of each protocol packet header; and encapsulate the to-be-encapsulated packet based on the target packet header and the length information of the target packet header. For a specific implementation, refer to the detailed descriptions of step 404 in FIG. 4. Details are not described herein again.

In some other optional embodiments, the control information of each protocol packet header includes description information of each protocol packet header. The processing unit 1102 is further configured to concatenate the at least one protocol packet header based on the description information of each protocol packet header. For a specific implementation, refer to the detailed descriptions of step 404 in FIG. 4. Details are not described herein again.

In some other optional embodiments, the processing unit 1102 is configured to map the second data to the at least one protocol packet header based on the second mapping parameter and valid information. The valid information indicates validity of the second data. For a specific implementation, refer to the detailed descriptions of step 403 in FIG. 4. Details are not described herein again.

In some other optional embodiments, the obtaining unit 1101 is further configured to obtain forwarding behavior information of the to-be-encapsulated packet. The processing unit 1102 is further configured to divide field data in the at least one protocol packet header based on the forwarding behavior information, to obtain the first data and the second data. For a specific implementation, refer to the detailed descriptions of step 401 in FIG. 4. Details are not described herein again.

The packet processing apparatus provided in this embodiment of this application is configured to perform the method in the method embodiment corresponding to FIG. 4. Therefore, for understanding of this embodiment of this application, refer to a related part in the method embodiment corresponding to FIG. 4.

In this embodiment of this application, the packet processing apparatus is presented in a form of functional units obtained through division in an integrated manner. The "functional unit" herein may be an application-specific integrated circuit (application-specific integrated circuit, ASIC), a memory and a processor that executes one or more software or firmware programs, an integrated logic circuit, and/or another device that can provide the foregoing functions. In a simple embodiment, a person skilled in the art may figure out that the packet processing apparatus may be in a form shown in FIG. 10.

For example, the processor 1001 in FIG. 10 may invoke the computer-executable instructions stored in the memory 1002, so that the packet processing apparatus performs the method performed by the packet processing apparatus in the method embodiment corresponding to FIG. 4.

Specifically, the functions/implementation processes of the processing unit 1102 in FIG. 11 may be implemented by the processor 1001 in FIG. 10 by invoking the computer-executable instructions stored in the memory 1002. Functions/implementation processes of the obtaining unit 1101 in FIG. 11 may be implemented by the transceiver 1003 in FIG. 10.

Components in the device in FIG. 10 of this application are communicatively connected. To be specific, the processing unit (or the processor), the storage unit (or the memory), and the transceiver unit (the transceiver) communicate with each other through an internal connection path, to transmit a control signal and/or a data signal. The foregoing method embodiment of this application may be applied to the processor, or the processor implements the steps of the foregoing method embodiment. The processor may be an integrated circuit chip and has a signal processing capability. In an implementation process, steps in the foregoing method embodiment may be implemented by using a hardware integrated logic circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in this application. The processor may be a microprocessor, or the processor may be any conventional processor, or the like. Steps of the method disclosed in this application may be directly executed and completed by using a hardware decoding processor, or may be executed and completed by using a combination of hardware in the decoding processor and a software module. The software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing method in combination with hardware of the processor. Although only one processor is shown in the figure, the apparatus may include a plurality of processors, or the processor includes a plurality of processing units. Specifically, the processor may be a single-core processor (single-CPU), or may be a multi-core processor (multi-CPU).

The memory is configured to store computer instructions executed by the processor. The memory may be a storage circuit, or may be a memory. The memory may be a volatile memory or a non-volatile memory, or may include both a volatile memory and a non-volatile memory. The non-volatile memory may be a read-only memory, a programmable read-only memory, an erasable programmable read-only memory, an electrically erasable programmable read-only memory, or a flash memory. The volatile memory may be a random access memory, used as an external cache. The memory may be independent of the processor, or may be a storage unit in the processor. This is not limited herein. Although only one memory is shown in the figure, the apparatus may include a plurality of memories, or the memory includes a plurality of storage units.

The transceiver is configured to implement content interaction between the processor and another unit or network element. Specifically, the transceiver may be a communications interface of the apparatus, or may be a transceiver circuit or a communications unit, or may be a transceiver. The transceiver may be alternatively a communications interface or a transceiver circuit of the processor. Optionally, the transceiver may be a transceiver chip. The transceiver may further include a sending unit and/or a receiving unit. In a possible implementation, the transceiver may include at least one communications interface. In another possible implementation, the transceiver may be alternatively a unit implemented in a software form. In each embodiment of this application, the processor may interact with another unit or network element through the transceiver. For example, the processor obtains or receives content from another network element through the transceiver. If the processor and the transceiver are two physically separated components, the processor may exchange content with another unit of the apparatus without using the transceiver.

In a possible implementation, the processor, the memory, and the transceiver may be connected to each other through a bus. The bus may be a peripheral component interconnect (peripheral component interconnect, PCI) bus or an extended industry standard architecture (extended industry standard architecture, EISA), or the like. The bus may be classified into an address bus, a data bus, a control bus, and the like.

All or some of the foregoing embodiments may be implemented by using software, hardware, firmware, or any combination thereof. When the software is used for implementation, all or some of the embodiments may be implemented in a form of a computer program product.

The computer program product includes one or more computer instructions. When the computer-executable instructions are loaded and executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A packet processing method, comprising:
obtaining (401) a to-be-encapsulated packet, wherein the to-be-encapsulated packet comprises first data and second data, the first data is pre-configured field data, and the second data is field data that is in the to-be-encapsulated packet and that changes as the to-be-encapsulated packet is forwarded;
obtaining (402) a first template and a second template, wherein the first template indicates a format pre-generated in a first protocol packet header for the first data, the second template indicates a combination relationship between at least one protocol packet header used when the to-be-encapsulated packet needs to be encapsulated, and the first protocol packet header is any one of the at least one protocol packet header;
mapping (402) the first data to the first protocol packet header based on the first template, and mapping the second data to the at least one protocol packet header based on the second template, to generate a target packet header,
wherein the mapping the first data to the first protocol packet header based on the first template comprises: determining a first mapping parameter from an encapsulation entry based on the first template, wherein the first mapping parameter is used to indicate a location of the first data in the first protocol packet header; and mapping the first data to the first protocol packet header based on the first mapping parameter and wherein the first template is obtained based on a first index in the encapsulation entry, and
wherein the mapping the second data to the at least one protocol packet header based on the second template comprises: determining a second mapping parameter from an encapsulation entry based on the second template, wherein the second mapping parameter is used to indicate a location of the second data in the at least one protocol packet header; and mapping the second data to the at least one protocol packet header based on the second mapping parameter; wherein the second template is obtained based on control information of each protocol packet header that is used to describe an attribute of a corresponding protocol packet header; and
encapsulating (404) the to-be-encapsulated packet based on the target packet header,
**characterized in:**
determining a first adjustment factor and/or a second adjustment factor, wherein the first adjustment factor is used to adjust an offset of the first data in the first protocol packet header when the first data is affected by encapsulation of a previous-stage encapsulation entry, and the second adjustment factor is used to select the first data that meets a preset condition; and
processing the first template based on the first adjustment factor and/or the second adjustment factor to obtain an adjusted first template.

2. The method according to claim 1, wherein the method further comprises:
obtaining at least one first identifier and length change information of each protocol packet header based on the second template, wherein each of the at least one first identifier is used to identify calculation logic used to process a corresponding protocol packet header; and
determining length information of the target packet header based on each first identifier and the length change information of each protocol packet header; and
the encapsulating the to-be-encapsulated packet based on the target packet header comprises:
encapsulating the to-be-encapsulated packet based on the target packet header and the length information of the target packet header.

3. The method according to claim 1 or 2, wherein the control information of each protocol packet header comprises description information of each protocol packet header, and the method further comprises:
concatenating the at least one protocol packet header based on the description information of each protocol packet header.

4. The method according to any one of claims 1 to 3, wherein the mapping the second data to the at least one protocol packet header based on the second mapping parameter further comprises
mapping the second data to the at least one protocol packet header based on the second mapping parameter and valid information, wherein the valid information indicates validity of the second data.

5. The method according to any one of claims 1 to 4, wherein the method further comprises:
obtaining forwarding information of the to-be-encapsulated packet; and
dividing field data in the at least one protocol packet header based on the forwarding information, to obtain the first data and the second data.

6. A packet processing apparatus, comprising:
a memory (1002), configured to store computer-readable instructions; and
a processor (1001) coupled to the memory (1002), configured to execute the computer-readable instructions in the memory to perform the method according to any one of claims 1 to 5.

7. A computer-readable storage medium comprising instructions, wherein when the instructions are run on a computer, the computer is enabled to perform the method according to any one of claims 1 to 5.

8. A computer program product comprising instructions, wherein when the instructions are run on a computer, the computer is enabled to perform the method according to any one of claims 1 to 5.

## Patentansprüche

1. Paketverarbeitungsverfahren, umfassend:
Erlangen (401) eines einzukapselnden Pakets, wobei das einzukapselnde Paket erste Daten und zweite Daten umfasst, die ersten Daten vorkonfigurierte Felddaten sind und die zweiten Daten Felddaten sind, die sich in dem einzukapselnden Paket befinden und die sich ändern, wenn das einzukapselnde Paket weitergeleitet wird;
Erlangen (402) einer ersten Vorlage und einer zweiten Vorlage, wobei die erste Vorlage ein Format angibt, das in einem ersten Protokollpaketheader für die ersten Daten vorerzeugt wird, die zweite Vorlage eine Kombinationsbeziehung zwischen mindestens einem Protokollpaketheader angibt, der verwendet wird, wenn das einzukapselnde Paket eingekapselt werden muss, und der erste Protokollpaketheader ein beliebiger des mindestens einen Protokollpaketheaders ist;
Zuordnen (402) der ersten Daten zu dem ersten Protokollpaketheader basierend auf der ersten Vorlage und Zuordnen der zweiten Daten zu dem mindestens einen Protokollpaketheader basierend auf der zweiten Vorlage, um einen Zielpaketheader zu erzeugen,
wobei das Zuordnen der ersten Daten zu dem ersten Protokollpaketheader basierend auf der ersten Vorlage Folgendes umfasst: Bestimmen eines ersten Zuordnungsparameters aus einem Einkapselungseintrag basierend auf der ersten Vorlage, wobei der erste Zuordnungsparameter dazu verwendet wird, einen Speicherort der ersten Daten in dem ersten Protokollpaketheader anzugeben;
und Zuordnen der ersten Daten zu dem ersten Protokollpaketheader basierend auf dem ersten Zuordnungsparameter und wobei die erste Vorlage basierend auf einem ersten Index in dem Einkapselungseintrag erlangt wird, und
wobei das Zuordnen der zweiten Daten zu dem mindestens einen Protokollpaketheader basierend auf der zweiten Vorlage Folgendes umfasst: Bestimmen eines zweiten Zuordnungsparameters aus einem Einkapselungseintrag basierend auf der zweiten Vorlage, wobei der zweite Zuordnungsparameter dazu verwendet wird, einen Speicherort der zweiten Daten in dem mindestens einen Protokollpaketheader anzugeben; und Zuordnen der zweiten Daten zu dem mindestens einen Protokollpaketheader basierend auf dem zweiten Zuordnungsparameter; wobei die zweite Vorlage basierend auf Steuerinformationen jedes Protokollpaketheaders erlangt wird, die verwendet werden, um ein Attribut eines entsprechenden Protokollpaketheaders zu beschreiben; und
Einkapseln (404) des einzukapselnden Pakets basierend auf dem Zielpaketheader,
**durch Folgendes gekennzeichnet:**
Bestimmen eines ersten Anpassungsfaktors und/oder eines zweiten Anpassungsfaktors, wobei der erste Anpassungsfaktor dazu verwendet wird, einen Offset der ersten Daten in dem ersten Protokollpaketheader anzupassen, wenn die ersten Daten durch die Einkapselung eines Einkapselungseintrags einer vorherigen Stufe betroffen sind, und der zweite Anpassungsfaktor dazu verwendet wird, die ersten Daten auszuwählen, die eine voreingestellte Bedingung erfüllen; und
Verarbeiten der ersten Vorlage basierend auf dem ersten Anpassungsfaktor und/oder dem zweiten Anpassungsfaktor, um eine angepasste erste Vorlage zu erlangen.

2. Verfahren nach Anspruch 1, wobei das Verfahren ferner Folgendes umfasst:
Erlangen von mindestens einer ersten Kennung und von Längenänderungsinformationen jedes Protokollpaketheaders basierend auf der zweiten Vorlage, wobei jede der mindestens einen ersten Kennung dazu verwendet wird, eine Berechnungslogik zu identifizieren, die dazu verwendet wird, einen entsprechenden Protokollpaketheader zu verarbeiten; und
Bestimmen von Längeninformationen des Zielpaketheaders basierend auf jeder ersten Kennung und den Längenänderungsinformationen jedes Protokollpaketheaders; und
wobei das Einkapseln des einzukapselnden Pakets basierend auf dem Zielpaketheader Folgendes umfasst:
Einkapseln des einzukapselnden Pakets basierend auf dem Zielpaketheader und den Längeninformationen des Zielpaketheaders.

3. Verfahren nach Anspruch 1 oder 2, wobei die Steuerinformationen jedes Protokollpaketheaders Beschreibungsinformationen jedes Protokollpaketheaders umfassen, und das Verfahren ferner Folgendes umfasst:
Verketten des mindestens einen Protokollpaketheaders basierend auf den Beschreibungsinformationen jedes Protokollpaketheaders.

4. Verfahren nach einem der Ansprüche 1 bis 3, wobei das Zuordnen der zweiten Daten zu dem mindestens einen Protokollpaketheader basierend auf dem zweiten Zuordnungsparameter ferner Folgendes umfasst:
Zuordnen der zweiten Daten zu dem mindestens einen Protokollpaketheader basierend auf dem zweiten Zuordnungsparameter und gültigen Informationen, wobei die gültigen Informationen eine Gültigkeit der zweiten Daten angeben.

5. Verfahren nach einem der Ansprüche 1 bis 4, wobei das Verfahren ferner Folgendes umfasst:
Erlangen von Weiterleitungsinformationen des einzukapselnden Pakets; und
Aufteilen von Felddaten in dem mindestens einen Protokollpaketheader basierend auf den Weiterleitungsinformationen, um die ersten Daten und die zweiten Daten zu erlangen.

6. Paketverarbeitungsvorrichtung, umfassend:
einen Speicher (1002), der dazu konfiguriert ist, computerlesbare Anweisungen zu speichern; und
einen Prozessor (1001), der an den Speicher (1002) gekoppelt ist und dazu konfiguriert ist, die computerlesbaren Anweisungen in dem Speicher auszuführen, um das Verfahren nach einem der Ansprüche 1 bis 5 durchzuführen.

7. Computerlesbares Speichermedium, umfassend Anweisungen, wobei, wenn die Anweisungen auf einem Computer umgesetzt werden, der Computer in die Lage versetzt wird, das Verfahren nach einem der Ansprüche 1 bis 5 durchzuführen.

8. Computerprogrammprodukt, umfassend Anweisungen, wobei, wenn die Anweisungen auf einem Computer umgesetzt werden, der Computer in die Lage versetzt wird, das Verfahren nach einem der Ansprüche 1 bis 5 durchzuführen.

## Revendications

1. Procédé de traitement de paquets, comprenant :
l'obtention (401) d'un paquet à encapsuler, dans lequel le paquet à encapsuler comprend des premières données et des secondes données, les premières données sont des données de champ préconfigurées, et les secondes données sont des données de champ qui se trouvent dans le paquet à encapsuler et qui changent à mesure que le paquet à encapsuler est transmis ;
l'obtention (402) d'un premier modèle et d'un second modèle, dans lequel le premier modèle indique un format pré-généré dans un premier en-tête de paquet de protocole pour les premières données, le second modèle indique une relation de combinaison entre au moins un en-tête de paquet de protocole utilisé lorsque le paquet à encapsuler doit être encapsulé, et le premier en-tête de paquet de protocole est l'un quelconque de l'au moins un en-tête de paquet de protocole ;
le mappage (402) des premières données au premier en-tête de paquet de protocole sur la base du premier modèle, et le mappage des secondes données à l'au moins un en-tête de paquet de protocole sur la base du second modèle, pour générer un en-tête de paquet cible,
dans lequel le mappage des premières données au premier en-tête de paquet de protocole sur la base du premier modèle comprend : la détermination d'un premier paramètre de mappage à partir d'une entrée d'encapsulation sur la base du premier modèle, dans lequel le premier paramètre de mappage est utilisé pour indiquer un emplacement des premières données dans le premier en-tête de paquet de protocole ; et le mappage des premières données au premier en-tête de paquet de protocole sur la base du premier paramètre de mappage et dans lequel le premier modèle est obtenu sur la base d'un premier indice dans l'entrée d'encapsulation, et
dans lequel le mappage des secondes données à l'au moins un en-tête de paquet de protocole sur la base du second modèle comprend : la détermination d'un second paramètre de mappage à partir d'une entrée d'encapsulation sur la base du second modèle, dans lequel le second paramètre de mappage est utilisé pour indiquer un emplacement des secondes données dans l'au moins un en-tête de paquet de protocole ; et le mappage des secondes données à l'au moins un en-tête de paquet de protocole sur la base du second paramètre de mappage ; dans lequel le second modèle est obtenu sur la base d'informations de commande de chaque en-tête de paquet de protocole qui sont utilisées pour décrire un attribut d'un en-tête de paquet de protocole correspondant ; et
l'encapsulation (404) du paquet à encapsuler sur la base de l'en-tête de paquet cible,
**caractérisé en ce que** :
la détermination d'un premier facteur d'ajustement et/ou d'un second facteur d'ajustement, dans lequel le premier facteur d'ajustement est utilisé pour ajuster un décalage des premières données dans le premier en-tête de paquet de protocole lorsque les premières données sont affectées par l'encapsulation d'une entrée d'encapsulation d'étape précédente, et le second facteur d'ajustement est utilisé pour sélectionner les premières données qui répondent à une condition prédéfinie ; et
le traitement du premier modèle sur la base du premier facteur d'ajustement et/ou du second facteur d'ajustement pour obtenir un premier modèle ajusté.

2. Procédé selon la revendication 1, dans lequel le procédé comprend également :
l'obtention d'au moins un premier identifiant et d'informations de changement de longueur de chaque en-tête de paquet de protocole sur la base du second modèle, dans lequel chacun de l'au moins un premier identifiant est utilisé pour identifier la logique de calcul utilisée pour traiter un en-tête de paquet de protocole correspondant ; et
la détermination d'informations de longueur de l'en-tête de paquet cible sur la base de chaque premier identifiant et des informations de changement de longueur de chaque en-tête de paquet de protocole ; et
l'encapsulation du paquet à encapsuler sur la base de l'en-tête de paquet cible comprend :
l'encapsulation du paquet à encapsuler sur la base de l'en-tête de paquet cible et des informations de longueur de l'en-tête de paquet cible.

3. Procédé selon la revendication 1 ou 2, dans lequel les informations de commande de chaque en-tête de paquet de protocole comprennent des informations de description de chaque en-tête de paquet de protocole, et le procédé comprend également :
la concaténation de l'au moins un en-tête de paquet de protocole sur la base des informations de description de chaque en-tête de paquet de protocole.

4. Procédé selon l'une quelconque des revendications 1 à 3, dans lequel le mappage des secondes données à l'au moins un en-tête de paquet de protocole sur la base du second paramètre de mappage comprend également :
le mappage des secondes données à l'au moins un en-tête de paquet de protocole sur la base du second paramètre de mappage et d'informations valides, dans lequel les informations valides indiquent la validité des secondes données.

5. Procédé selon l'une quelconque des revendications 1 à 4, dans lequel le procédé comprend également :
l'obtention des informations de transfert du paquet à encapsuler ; et
la division de données de champ dans l'au moins un en-tête de paquet de protocole sur la base des informations de transfert, pour obtenir les premières données et les secondes données.

6. Appareil de traitement de paquets, comprenant :
une mémoire (1002), configurée pour stocker des instructions lisibles par ordinateur ; et
un processeur (1001) couplé à la mémoire (1002), configuré pour exécuter les instructions lisibles par ordinateur dans la mémoire pour réaliser le procédé selon l'une quelconque des revendications 1 à 5.

7. Support de stockage lisible par ordinateur comprenant des instructions, dans lequel, lorsque les instructions sont exécutées sur un ordinateur, l'ordinateur est activé pour réaliser le procédé selon l'une quelconque des revendications 1 à 5.

8. Produit de programme informatique comprenant des instructions, dans lequel lorsque les instructions sont exécutées sur un ordinateur, l'ordinateur est activé pour réaliser le procédé selon l'une quelconque des revendications 1 à 5.
